**Europäisches Patentamt**

**European Patent Office**

**Office européen des brevets**

(19)

(11) Veröffentlichungsnummer : **0 163 986**
**B1**

# EUROPÄISCHE PATENTSCHRIFT

(12)

(45) Veröffentlichungstag der Patentschrift :
27.07.88

(21) Anmeldenummer : 85105828.9

(22) Anmeldetag : 11.05.85

(51) Int. Cl.⁴ : **B 60 K 11/08**, B 60 K 11/04

(54) Stellglied für die Kühlerjalousie eines Kraftfahrzeuges.

(30) Priorität : 08.06.84 DE 3421414

(43) Veröffentlichungstag der Anmeldung :
11.12.85 Patentblatt 85/50

(45) Bekanntmachung des Hinweises auf die Patenterteilung : 27.07.88 Patentblatt 88/30

(84) Benannte Vertragsstaaten :
AT CH DE LI SE

(56) Entgegenhaltungen :
DE-A- 2 359 388
DE-A- 3 019 599
DE-A- 3 145 414
DE-C- 342 852
DE-C- 591 856
DE-C- 943 158
DE-U- 7 716 940
FR-A- 2 541 200
US-A- 3 498 538

(73) Patentinhaber : Adam Opel Aktiengesellschaft
Bahnhofsplatz 1 Postfach 1560
D-6090 Rüsselsheim (DE)

(72) Erfinder : Häner, Bernhard
Im Reis 40
D-6090 Rüsselsheim (DE)

(74) Vertreter : Elbert, Karl, Dipl.-Ing. et al
Adam Opel AG Patentabteilung Bahnhofsplatz 1 Postfach 1560
D-6090 Rüsselsheim (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein durch einen Hydraulik- oder Pneumatikzylinder gebildetes Stellglied zur Regelung der durch den Kühler eines Kraftfahrzeuges strömenden Luft durch Verstellung der Kühlerjalousie.

Nach der DE-A-30 19 599 ist bereits eine den Motorraum eines Kraftfahrzeuges nach vorne abschließende Vorderwand bekannt, die vor dem Kühler für die Kühlmittelflüssigkeit des Motors angeordnet ist und Klappen zum Regeln des während der Fahrt auf den Kühler auftreffenden Kühlluftstromes hat, deren Stellung durch einen die Temperatur der Kühlflüssigkeit des Motors fühlenden Thermostaten regelbar ist. Der Thermostat besteht aus einem Wachs-Temperaturfühler, der die Temperatur der Kühlflüssigkeit am Ausgang des Kühlers abfühlt und über eine Leitung mit einem öldynamischen Arbeitszylinder zum Verstellen der Kühlluftklappen verbunden ist. Der Arbeitszylinder wird über eine Leitung mit Druckflüssigkeit versorgt, wenn der Temperaturfühler eine Temperatur fühlt, die höher ist als ein vorbestimmter Wert. Diese bekannte Anordnung benötigt also zur Steuerung des Arbeitszylinders zusätzlich einen Thermostaten und eine Energiequelle.

Aufgabe der Erfindung ist es, die bekannte Anordnung zu vereinfachen und zu verbessern, so daß der Temperaturfühler im Kühler und die zusätzliche Energiequelle entfällt. Dies wird gemäß der Erfindung auf vorteilhafte Weise dadurch erreicht, daß das Stellglied für die Verstellung der Kühlerjalousie unmittelbar auf den im Kühlsystem herrschenden Druck anspricht und den erforderlichen Arbeitsdruck aus dem Kühlsystem bezieht.

Nach einem weiteren Anspruch der Erfindung ist vorgeschlagen, die Betätigung der Kühlerjalousie durch Einschalten des Stellgliedes erst bei einem Druck einzuleiten, der bei einer Temperatur von etwa 100 °C auftritt. Bis dahin ist die Kühlerjalousie geschlossen, was einen günstigen Einfluß auf das schnelle Erreichen der Betriebstemperatur des Motors hat und den Luftwiderstandsbeiwert drückt. Ist das Kühlsystem mit einem in Abhängigkeit von der Kühlmitteltemperatur schaltbaren Ventilator versehen, dann kann die Einschaltung des Ventilators nach Öffnen der Kühlerjalousie erfolgen.

Die erfindungsgemäße Anordnung hat den Vorteil, daß sie nach richtiger Auslegung selbsttätig arbeitet und nur ein geringer Regelaufwand erforderlich ist. Es wird kein Temperaturgeber und kein Servomotor oder eine andere Energiequelle benötigt, so daß Kosten eingespart werden.

In der Zeichnung ist ein Ausführungsbeispiel gemäß der Erfindung dargestellt, und zwar zeigt:

Fig. 1 eine graphische Darstellung der Abhängigkeit des Druckes im Kühlsystem von der Kühlmitteltemperatur und

Fig. 2 eine perspektivische Ansicht der erfindungsgemäßen Anordnung im zerlegten Zustand.

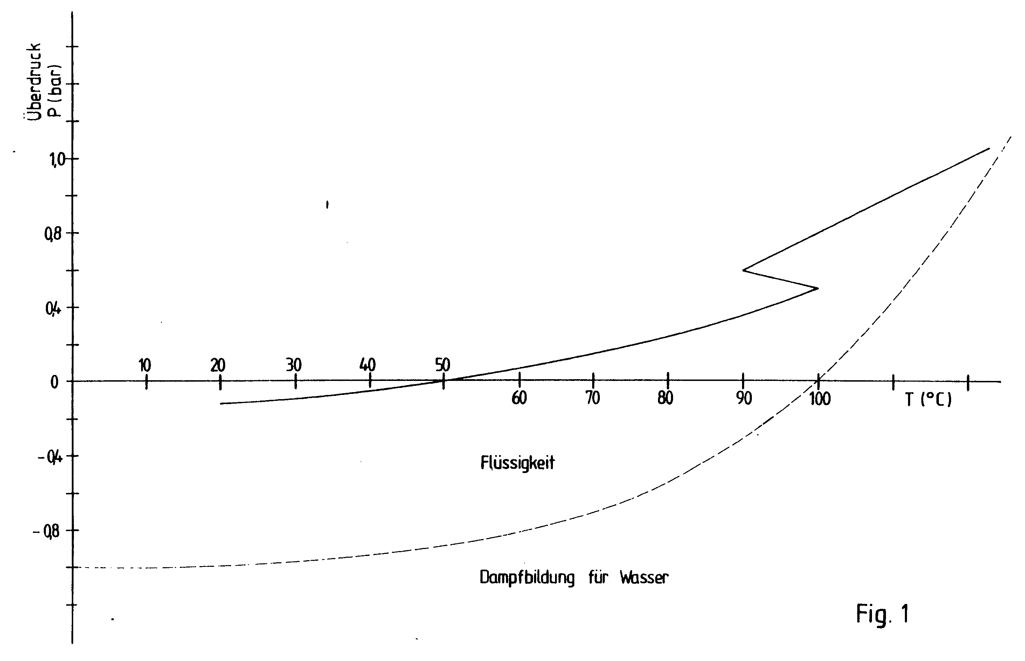

Wie aus Fig. 1 hervorgeht, steigt der Druck im Kühlsystem mit Erhöhung der Temperatur an. Von dieser Erscheinung wird durch die Erfindung zur Regelung der durch den Kühler eines Kraftfahrzeuges strömende Luft durch Verstellung der Klappen der Kühlerjalousie Gebrauch gemacht. Der Z-förmige Verlauf der Kurve nach Fig. 1 im Bereich zwischen 90° und 100 °C Kühlmitteltemperatur ist auf das Öffnen des Thermostatventils im Kreislauf zurückzuführen. Um einen günstigen Einfluß auf das schnelle Erreichen der Betriebstemperatur des Motors auszuüben und um den Luftwiderstandsbeiwert niedrig zu halten, sollte die Betätigung der Kühlerjalousie erst bei etwa 100 °C einsetzen. Bis dahin bleibt die Kühlerjalousie geschlossen. Wenn das Kühlsystem auch einen in Abhängigkeit von der Kühlmitteltemperatur schaltbaren Ventilator umfaßt, dann ist es zweckmäßig, nach Öffnen der Kühlerjalousie den Ventilator einzuschalten. Bei geschlossenem Kühlsystem kann die Kühlmitteltemperatur bis etwa 120 °C ansteigen, der Druck steigt dabei auf etwa 2 bar an.

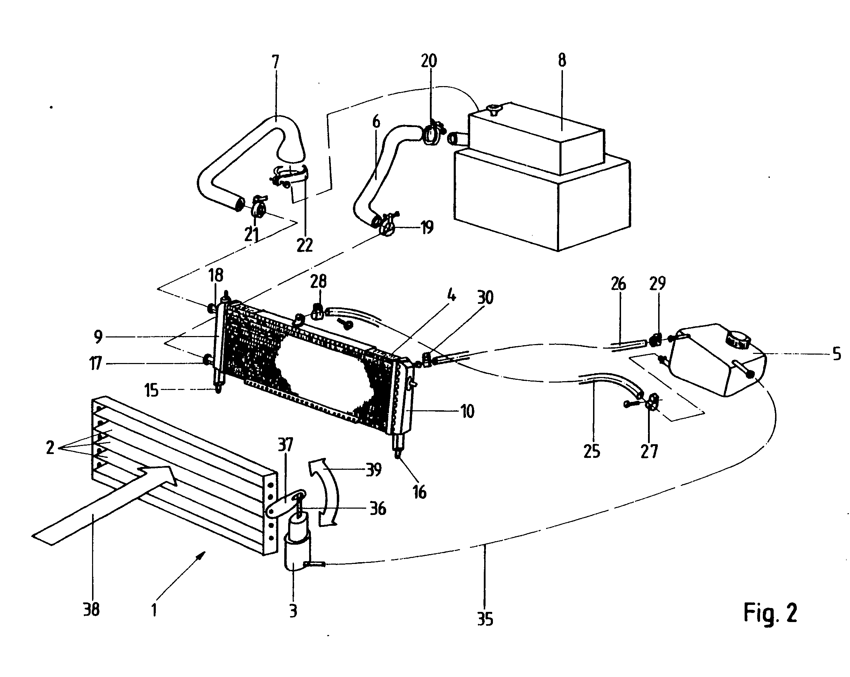

Das in Fig. 2 abgebildete Kühlsystem besteht aus der Kühlerjalousie 1 mit den schwenkbaren Klappen 2, die mittels eines Hydraulik- oder Pneumatikzylinders 3 verstellt werden, dem Kühler 4, dem Kühlmittelausgleichsbehälter 5 und den Leitungen 6 und 7 zum Anschluß des Kühlers 4 an die Brennkraftmaschine 8. An beiden Seiten des Kühlers 4 befinden sich Sammelkästen 9 und 10, die an ihrem unteren Ende Befestigungselemente 15 und 16 zum Befestigen des Kühlers am Fahrzeugrahmen aufweisen. Am Sammelkasten 9 sind Stutzen 17 und 18 zum Befestigen der zum Motor 8 führenden Leitungen 6 und 7 mittels Rohrschellen 19 bis 22 vorgesehen. Leitungen 25 und 26 führen vom Kühlmittelausgleichsbehälter 5 zum Kühler 4 und sind mittels Rohrschellen 27 bis 30 an entsprechenden Stutzen befestigt. Der Hydraulik- oder Pneumatikzylinder 3 ist über eine Leitung 35 mit dem oberen Bereich des Kühlmittelausgleichsbehälters 5 verbunden, so daß aus diesem Behälter der zur Betätigung des Zylinders 3 erforderliche Druck entnommen werden kann. Die Kolbenstange 36 des Zylinders 3 ist an einen Verstellhebel 37 für die Klappen 2 der Kühlerjalousie 1 angelenkt.

Bei kaltem Motor 8 sind die Klappen 2 ganz geschlossen, so daß beim Fahren keine Kühlluft zum Kühler 4 gelangt. Erst wenn das Kühlmittel eine Temperatur von etwa 100 °C erreicht hat, betätigt der dann vorhandene Druck im Kühlsystem den Zylinder 3, der die Klappen 2 für den Durchtritt der Kühlluft (Pfeil 38) öffnet. Sinkt die Kühlmitteltemperatur, so fällt der Druck ab und die Klappen 2 werden wieder geschlossen. Die Schwenkbewegung des Verstellhebels 37 ist durch den Pfeil 39 angedeutet. Der Gefahr, daß die Klappen 2 bei Vereisung im Winter nicht mehr öffnen und der Motor 8 überhitzt wird, kann dadurch begegnet werden, daß eine kleine Öffnung für die Kühlluft immer offen gehalten wird.

Es liegt auf der Hand, daß zahlreiche Abwandlungen und Änderungen des beschriebenen Ausführungsbeispiels aufgrund der offenbarten Lehre nach Anspruch 1 möglich sind. Die Erfindung kann deshalb auch auf andere Weise realisiert werden, als dies bei der in der Zeichnung dargestellten Ausführungsform der Fall ist.

**Patentansprüche**

1. Durch einen Hydraulik- oder Pneumatikzylinder gebildetes Stellglied (3) zur Regelung der durch den Kühler eines Kraftfahrzeuges strömenden Luft durch Verstellung der Kühlerjalousie (1), dadurch gekennzeichnet, daß das Stellglied (3) unmittelbar auf den im Kühlsystem herrschenden Druck anspricht und den erforderlichen Arbeitsdruck aus dem Kühlsystem bezieht.

2. Stellglied nach Anspruch 1, dadurch gekennzeichnet, daß das Stellglied (3) erst bei einem Druck eingeschaltet wird, der bei einer Temperatur des Kühlmittels von etwa 100 °C auftritt.

**Claims**

1. Adjusting member (3), formed of a hydraulic or pneumatic cylinder, for regulating the air flowing through the radiator of a motor vehicle by adjusting the radiator grill (1), characterised in that the adjusting member (3) responds directly to the pressure in the cooling system and takes the required working pressure from the cooling system.

2. Adjusting member according to claim 1, characterised in that the adjusting member (3) is activated only at a pressure which is reached when the temperature of the cooling agent reaches approximately 100 °C.

**Revendications**

1. Organe de commande (3), formé par un vérin hydraulique ou pneumatique, pour le réglage du débit de l'air à travers le radiateur d'un véhicule automobile par déplacement de la persienne (1) dudit radiateur, caractérisé par le fait que ledit organe de commande (3) réagit directement à la pression régnant dans le système de refroidissement et prélève sur ce dernier la pression de fonctionnement nécessaire.

2. Organe de commande selon la revendication 1 caractérisé par le fait qu'il n'est franchi que sous une pression qui apparaît à une température du réfrigérant d'environ 100 °C.

Fig. 1

Fig. 2